# FASCICULE DE BREVET EUROPEEN

(11) **EP 3 655 371 B1**
(45) Date de publication et mention de la délivrance du brevet: **03.01.2024**
(21) Numéro de dépôt: 18734524.4
(22) Date de dépôt: 25.06.2018
(51) Int. Cl.: C03C 17/36

(54) **MATÉRIAU COMPRENANT UN EMPILEMENT À PROPRIÉTÉS THERMIQUES**
MATERIAL MIT EINEM STAPEL MIT WÄRMEEIGENSCHAFTEN
MATERIAL COMPRISING A STACK WITH THERMAL PROPERTIES

(30) Priorité: 21.07.2017 FR 1756949
(43) Date de publication de la demande: 27.05.2020
(73) Titulaire: SAINT-GOBAIN GLASS FRANCE, 92400 Courbevoie (FR)
(72) Inventeur: WANAKULE, Nisita, 75019 Paris (FR); BEUTIER, Julien, 75005 Paris (FR)
(74) Mandataire: Saint-Gobain Recherche
(86) Numéro de dépôt international: PCT/EP2018/066941
(87) Numéro de publication internationale: WO 2019/015917

(56) Documents cités:
- EP-A1- 3 514 583
- WO-A1-2017/006029
- US-A1- 2006 280 951
- US-A1- 2010 046 191
- US-A1- 2012 225 224
- US-A1- 2014 022 630
- US-A1- 2014 237 917
- NORA DAHMOUCHÈNE ET AL: "Optical properties of NiCrOx thin films", PHYSICA STATUS SOLIDI (C), vol. 5, no. 5, 1 mai 2008 (2008-05-01), pages 1145-1149, XP055501221, DE ISSN: 1610-1634, DOI: 10.1002/pssc.200777780
- BRATVOLD JON E ET AL: "Atomic Layer Deposition of oriented nickel titanate (NiTiO3)", APPLIED SURFACE SCIENCE, vol. 311, 5 août 2014 (2014-08-05), pages 478-483, XP028875811, ISSN: 0169-4332, DOI: 10.1016/J.APSUSC.2014.05.092

## Description

La présente invention concerne un matériau comprenant un substrat transparent sur la surface duquel est déposé un empilement de couches qui comprend lui-même une pluralité de couches fonctionnelles permettant d'agir sur le rayonnement solaire et/ou infrarouge susceptible de heurter ladite surface. L'invention a également trait à un vitrage comprenant un tel matériau.

Les accords et dispositifs légaux ayant pour objectif de réduire les impacts environnementaux des activités humaines se multiplient aux échelles régionales, nationales et internationales. Ces accords et dispositifs visent notamment à réduire la consommation d'énergie des infrastructures. Ils préconisent ou obligent en particulier l'équipement des bâtiments et des véhicules de transports de manière à réduire la consommation d'énergie de leurs moyens de climatisation et de chauffage.

Les surfaces vitrées constituent souvent la majorité des surfaces externes des bâtiments et véhicules de transport, et leur part ne cesse de croître pour répondre au besoin des usagers en matière d'éclairage par la lumière naturelle. Cependant, ces surfaces vitrées peuvent être des sources passives de chaleur, en particulier lors des périodes de fort ensoleillement, tout comme des sources de dissipation de chaleur, en particulier lors des périodes hivernales. En conséquence, les variations de températures à l'intérieur des bâtiments et véhicules équipés de ces surfaces vitrées peuvent être très importantes. Ces variations de températures peuvent provoquer des sensations d'inconfort et inciter à une utilisation importante des moyens de climatisation et de chauffage.

Pour des raisons énergétiques et de confort, les surfaces vitrées doivent être fonctionnalisées afin d'agir sur les rayonnements solaires et/ou infrarouges incidents, de manière à réduire les phénomènes « d'effet de serre ». La fonctionnalisation de ces surfaces est généralement réalisée par le dépôt sur lesdites surfaces d'un empilement de couches comprenant des couches fonctionnelles métalliques. Ces couches confèrent aux surfaces, ainsi qu'aux vitrages qui les comprennent, des fonctions dites « sélectives » permettant de diminuer la quantité d'énergie transmise au travers du vitrage vers l'intérieur sans préjudice pour la transmission lumineuse dans le spectre visible.

Les performances des surfaces vitrées ou vitrages fonctionnalisées sont évaluées généralement à l'aide de trois paramètres :
- le facteur solaire, *g,* défini comme le rapport de l'énergie totale transmise au travers de la surface vitrée ou du vitrage vers l'intérieur sur l'énergie solaire incidente ;
- la transmission lumineuse dans le spectre visible, *T_{L}*, définie comme le rapport de la quantité de lumière incidente sur la quantité de lumière du spectre visible transmise au travers de la surface vitrée ou du vitrage ;
- la sélectivité, s, définie comme le rapport de la transmission lumineuse *T_{L}* sur le facteur solaire *g,* soit *T_{L}*/*g.*

Les surfaces vitrées et les vitrages qui les comprennent, possèdent donc idéalement des fonctions telles que :
- la transmission lumineuse soit la plus élevée, au moins 65%, voire au moins 68%,
- le facteur solaire d'au plus 36%,
- la sélectivité d'au moins 1,9.

En outre, pour des raisons esthétiques, ces surfaces vitrées et vitrages doivent présenter, en réflexion extérieure, en réflexion intérieure et en transmission, un aspect de surface agréable à l'œil. Cela se traduit notamment par une couleur neutre, c'est-à-dire de préférence proche de la couleur grise, dans la gamme chromatique bleu-vert, dont les nuances doivent peu varier selon l'angle d'observation.

La demande de brevet WO2012093238 A1 divulgue un matériau comprenant un empilement de couches qui comprend lui-même au moins trois couches fonctionnelles métalliques à base d'argent, chacune des couches fonctionnelles étant séparée les unes des autres par un ensemble diélectrique de couches. L'ensemble diélectrique de couches situé en-dessous de la première couche fonctionnelle en partant du substrat et l'ensemble diélectrique de couches situé au-dessus de la dernière couche fonctionnelle en partant du substrat comprennent chacune une couche de haut indice de réfraction égal ou supérieur à 2,15 à 550nm. Les valeurs susmentionnées de la transmission lumineuse, du facteur solaire et de la sélectivité ne sont atteintes qu'après que l'empilement et le substrat aient subi un traitement thermique dont la température est supérieure à 500°C. Les valeurs des deux paramètres a* et b* dans le système L*a*b* sont proches de zéro, notamment inférieurs à 2 pour a*, et varient peu lorsque l'angle d'observation varie entre 0 et 60°.

La demande de brevet WO2017006029 A1 décrit un matériau comprenant un substrat transparent et un empilement de couches qui comprend lui-même au moins trois couches fonctionnelles métalliques à base d'argent, chacune des couches fonctionnelles étant séparées les unes des autres par un ensemble diélectrique de couches. Chaque ensemble diélectrique de couche comprend au moins une couche de haut indice de réfraction égal ou supérieur à 2,15 et d'une épaisseur optique supérieure à 20nm. Pour chaque ensemble diélectrique de couche, le rapport de l'épaisseur optique de la couche de haut indice de réfraction sur l'épaisseur optique de l'ensemble diélectrique qui la contient est supérieur à 0,3. Les valeurs susmentionnées de la transmission lumineuse, du facteur solaire et de la sélectivité sont atteintes sans aucun traitement thermique. Le vitrage comprenant le matériau répond également aux mêmes exigences de neutralité des couleurs que le document WO2012093238 A1. US 2012/225224 divulgue un substrat revêtu comprenant trois couches métalliques fonctionnelles à base d'argent et quatre revêtements diélectriques.

Pour des raisons d'économie des ressources minières et énergétiques nécessaires à leur fabrication, il est opportun de pouvoir simplifier les produits tout en conservant les mêmes performances. En l'espèce, il est avantageux d'avoir un matériau satisfaisant aux exigences susmentionnées en termes de transmission lumineuse, de facteur solaire, de sélectivité, et de couleur avec un empilement simplifié en limitant si possible les éléments chimiques coûteux et sans recourir à un traitement thermique.

La présente invention concerne un matériau selon la revendication 1. Les revendications dépendantes présentent des caractéristiques avantageuses.

Dans la présente description, il fait usage des définitions et conventions suivantes.

Les termes « premier (e) », « dernier (e) », « au-dessus » et « en-dessous » qualifient la position des couches ou d'un ensemble de couches de l'empilement relativement à l'orientation et à la position du substrat sur lequel il est déposé. La position du substrat peut être horizontale, verticale ou inclinée selon le choix retenu pour la mise en œuvre de l'invention. L'ordre d'énumération des couches ou des ensembles de couches est défini depuis le substrat en direction de la surface de l'empilement opposée au substrat. Ainsi, le terme « premier(e) », respectivement le terme « dernier(e) », lorsqu'il qualifie une couche ou un ensemble de couches, signifie que la dite couche ou ledit ensemble de couches est la ou le plus proche, respectivement la ou le plus éloigné, du substrat. Le terme « au-dessus », respectivement « en-dessous », qualifiant la position d'une couche ou d'un ensemble de couches et défini relativement à la position d'une couche fonctionnelle, signifie que ladite couche ou ledit ensemble de couches est plus proche, respectivement plus éloigné, du substrat. Ces deux termes, « au-dessus » et « en-dessous », ne signifient nullement que la couche ou l'ensemble de couches qu'ils qualifient et la couche fonctionnelle par rapport à laquelle ils sont définis soient en contact. Ils n'excluent pas la présence d'autres couches intermédiaires entre ces deux couches. L'expression « en contact » est explicitement utilisée pour indiquer qu'aucune autre couche n'est disposée entre eux.

Sans aucune précision ou qualificatif, le terme « épaisseur » utilisé pour une couche correspond à l'épaisseur physique, réel ou géométrique, E, de ladite couche. Elle est exprimée en nanomètres. L'expression « épaisseur optique » est utilisée pour indiquer explicitement l'épaisseur optique, notée *Eo*, d'une couche. Elle est définie par la relation *Eo* = *n * E* où *n* est l'indice de réfraction de la couche et *E* son épaisseur physique, réelle ou géométrique. L'indice de réfraction des couches est mesuré à la longueur d'onde électromagnétique de 550nm. L'épaisseur optique est également exprimée en nanomètres.

L'expression « ensemble diélectrique de couches » désigne une ou plusieurs couches en contact les unes avec les autres formant un empilement globalement diélectrique, c'est-à-dire qu'il n'a pas les fonctions d'une couche fonctionnelle métallique. Si l'ensemble diélectrique comprend plusieurs couches, celles-ci peuvent elles-mêmes être diélectriques. L'épaisseur, respectivement l'épaisseur optique, d'un ensemble diélectrique de couches, correspond à la somme des épaisseurs, respectivement des épaisseurs optiques, de chacune des couches qui le constituent.

Dans la présente description, l'expression « à base de », utilisée pour qualifier un matériau ou une couche quant à ce qu'il ou elle contient, signifie que la fraction massique du constituant qu'il ou elle comprend est d'au moins 50%, en particulier au moins 70%, de préférence au moins 90%.

La transmission lumineuse dans le spectre visible, le facteur solaire et la sélectivité sont définis, mesurés et calculés en conformité avec les normes EN 410 et EN 14501. La couleur est mesurée dans l'espace chromatique L*a*b* CIE 1976 selon la norme ISO 11664 avec un illuminant D65 et un champ visuel de 2° pour l'observateur de référence.

Un vitrage comprenant un matériau selon l'invention présente de préférence une transmission lumineuse dans le spectre visible d'au moins 68%, un facteur solaire d'au plus 36% et une sélectivité d'au moins 1,9. L'aspect esthétique du vitrage se caractérise de préférence par une couleur neutre en réflexion dont la teinte varie peu lorsque l'angle d'observation varie entre 0 et 60°. En particulier, la valeur absolue de la variation des paramètres a* et b* dans l'espace chromatique L*a*b* lorsque l'angle d'observation varie entre 0 et 60° est inférieure ou égal à 5.

Chaque ensemble diélectrique de couches comporte généralement au moins une couche à base d'un matériau diélectrique qui peut être à base de nitrure, notamment les nitrures de silicium ou d'aluminium, et/ou à base d'oxyde.

Les couches fonctionnelles métalliques sont des couches continues. Elles sont de préférence au nombre de trois ou quatre. La fraction massique d'argent contenu dans les couches fonctionnelles métalliques à base d'argent est d'au moins 95%, de préférence au moins 98%.

Afin de réduire la quantité de matière déposée, les épaisseurs des couches fonctionnelles métalliques à base d'argent peuvent avantageusement être réduites, sans préjudice pour les performances optiques et thermiques, tant que l'épaisseur de chaque couche fonctionnelle métallique à base d'argent est supérieure à l'épaisseur de la couche fonctionnelle à base d'argent qui la précède en partant du substrat. De manière générale, l'épaisseur de chacune des couches fonctionnelles à base d'argent peut être de préférence comprise entre 6 et 20 nm.

Pour la même raison de réduction de la quantité de matière déposée, les épaisseurs des ensembles diélectriques de couches peuvent être réduites, sans préjudice pour les performances optiques et thermiques, tant que l'épaisseur optique de l'ensemble diélectrique de couches situé au-dessus de la dernière couche fonctionnelle métallique à base d'argent en partant du substrat est inférieure ou égale à l'épaisseur optique de l'ensemble diélectrique de couches situé en-dessous de la première couche fonctionnelle métallique à base d'argent en partant du substrat. A titre d'indications non limitatives, l'épaisseur optique de l'ensemble diélectrique de couches situé au-dessus de la dernière couche fonctionnelle métallique à base d'argent en partant du substrat est comprise entre 20 et 50 nm, de préférence entre 30 et 40nm, et l'épaisseur optique de l'ensemble diélectrique de couches situé en-dessous de la première couche fonctionnelle métallique à base d'argent en partant du substrat est comprise entre 50 et 100 nm, de préférence entre 55 et 75 nm.

Selon l'invention, l'ensemble diélectrique de couches situé en-dessous de la première couche fonctionnelle métallique à base d'argent en partant du substrat et l'ensemble diélectrique de couches situé au-dessus de la dernière couche fonctionnelle métallique à base d'argent en partant du substrat comprennent de préférence chacun une couche de haut indice de réfraction, ledit indice étant égal ou supérieur à 2,15 à une longueur d'onde de550nm. Ces couches de haut indice de réfraction peuvent être à base de composés choisis parmi TiO₂, MnO, WO₃, NiO, ZnTiO₄, Nb₂O₅, BaTiO₃, Bi₃O₃, SiZrN, Zr₃N₄.

Lorsque la valeur de l'indice de réfraction d'au moins une desdites couches de haut indice de réfraction est égale ou supérieure à 2,40 à une longueur d'onde de 550nm selon l'invention, celle-ci peut être à base composés choisis parmi TiO₂, BaTiO₃, Bi₃O₃, Zr₃N₄.

Si lesdites couches de haut indice de réfraction sont toutes des couches d'indice de réfraction supérieur à 2,40 à une longueur d'onde de 550nm, elles peuvent être à base du même composé ou de composés différents.

Il n'est pas requis que les composés compris dans les couches de haut indice de réfraction, notamment ceux indiquées en exemple, soient parfaitement stœchiométriques. Ils peuvent présenter des écarts à la stoechiométrie pour les teneurs en oxygène, en azote et/ou en autres éléments tant que la condition sur la valeur de l'indice de réfraction, à savoir supérieure à 2,15 ou 2,40 à une longueur d'onde de 550nm, est respectée. De même, il n'est pas exclus qu'ils comprennent des éléments dopants, tel que l'aluminium.

Le substantif « stoechiométrie » et ses adjectifs dérivés doivent être interprétés selon le sens conventionnel du domaine technique. Il signifie notamment que les proportions des éléments chimiques constituant un composé correspondent à celles du « composé défini » tel que les diagrammes thermochimiques ou les conventions en vigueur dans le domaine technique le définissent.

Afin de réduire la quantité de matière déposée, les épaisseurs optiques de chacune desdites couches de haut indice de réfraction peuvent être avantageusement comprises entre 10 et 70 nm, de préférence entre 20 et 50 nm.

Il est préférable que la valeur du coefficient d'absorption des couches de haut indice de réfraction soit inférieure ou égale à 0,02 à 550nm. Par conséquent, bien qu'il soit peut-être possible d'atteindre les performances optiques et thermiques recherchées avec des couches métalliques de haut indice de réfraction, il n'est pas conseillé de les utiliser aux fins de l'invention. La valeur de leur coefficient d'absorption est généralement supérieure à 0,02. Cependant, il est possible qu'un recuit dans une atmosphère oxydante d'un matériau selon l'invention comprenant une telle couche métallique permette d'oxyder ladite couche métallique de manière à ce que son indice de réfraction soit supérieur à 2,15 et la valeur de son coefficient d'absorption inférieure ou égale à 0,02.

Selon l'invention, l'épaisseur optique de l'ensemble diélectrique de couches situé en-dessous de la première couche fonctionnelle à base d'argent est inférieure aux épaisseurs optiques de chacun des ensembles diélectriques de couches situés entre la première et la dernière couche fonctionnelle métallique à base d'argent. Le principal avantage de cela est de permettre de réduire davantage les épaisseurs de couches formant l'empilement. En particulier, l'épaisseur optique de chacun des ensembles diélectriques de couches situés entre la première et la dernière couche fonctionnelle métallique à base d'argent est comprise entre 100 et 200 nm, de préférence entre 150 et 180 nm.

Selon un autre mode de réalisation de l'invention, chaque ensemble diélectrique de couches situés entre la première et la dernière couches fonctionnelles métalliques à base d'argent en partant du substrat ne comprend pas de couche de haut indice de réfraction dont la valeur de l'indice de réfraction est égale ou supérieure à 2,15 à 550nm. Il a été constaté en effet qu'il n'y avait pas de bénéfice supplémentaire significatif lorsque la première et la dernière couche fonctionnelles métalliques à base d'argent en partant du substrat comprennent une couche de haut indice. Les valeurs des paramètres optiques et thermiques varient peu. Une telle couche de haut indice peut donc être omise lorsqu'une simplification de l'empilement est recherchée. Cela a également pour avantage de réduire les coûts associés à l'utilisation d'éléments chimiques requis pour former des couches de haut indice de réfraction.

L'empilement peut comprendre en outre au moins une couche stabilisante dite de « contact inférieur » disposée en-dessous et en contact d'une couche fonctionnelle métallique à base d'argent. La fonction de cette couche, généralement de très faible épaisseur, est de favoriser l'adhésion et la cristallisation de l'argent. Cette couche est également appelée « couche de mouillage ». En ce sens il peut être avantageux qu'une telle couche soit disposée en-dessous et en contact de chaque une couche fonctionnelle métallique à base d'argent que comprend l'empilement. Cette couche est de préférence à base d'oxydes choisis parmi les oxydes de zinc, les oxydes de nickel, les oxydes de magnésium, les oxydes mixtes de zinc et d'étain, les oxydes mixtes de zinc et de magnésium, les oxydes mixtes de zinc et de titane.

Les composés compris dans les couches de « contact inférieur », peuvent présenter des écarts à la stoechiométrie pour les teneurs en oxygène, en azote et/ou en autres éléments. Ils peuvent comprendre des éléments dopants, tel que l'aluminium pour l'oxyde de zinc.

L'empilement peut également comprendre en outre une couche dite de blocage disposée au-dessus et en contact d'une couche fonctionnelle métallique à base d'argent. La fonction de cette couche, généralement de très faible épaisseur, est de protéger la couche d'argent lorsque le dépôt de la couche subséquente est réalisée dans une atmosphère oxydante ou lorsque certains éléments comme l'oxygène sont susceptibles de migrer d'une couche à l'autre lors d'un traitement thermique. S'il est nécessaire de protéger chaque couche d'argent, il est avantageux qu'une couche de blocage soit disposée au-dessus et en contact de chaque couche fonctionnelle à base d'argent que comprend l'empilement. Cette couche est de préférence à base des métaux ou alliages choisis parmi Ti et NiCr.

L'empilement peut éventuellement comprendre en outre une couche dite de lissage disposée en-dessous et en contact de la couche de contact inférieur. Sa fonction est favoriser la croissance de la couche de contact inférieur. Cette couche de lissage est à base d'oxyde mixte, de préférence un oxyde de zinc et d'étain lorsque la couche de contact inférieur est à base d'oxyde de zinc. Elle peut être complètement amorphe ou partiellement cristalline. Elle est généralement non cristalline dans toute son épaisseur.

Selon un mode particulièrement avantageux de réalisation de l'invention, la couche de haut indice de réfraction comprise dans l'ensemble diélectrique de couches situé en-dessous de la première couche fonctionnelle métallique à base d'argent est à base d'oxyde de titane, et la couche de haut indice de réfraction comprise dans l'ensemble diélectrique de couches situé au-dessus de la dernière couche fonctionnelle à partir du substrat est à base de nitrure de silicium et zirconium. La valeur du rapport atomique Zr/Si dudit nitrure de silicium et zirconium peut être de préférence inférieur ou égal à 1.

La couche de lissage et la couche de contact inférieur sont considérées comme comprises dans l'ensemble diélectrique de couches qui est disposé sous la couche fonctionnelle métallique à base d'argent à laquelle ces deux couches se rapportent.

Dans un premier mode préféré de réalisation de l'invention, l'empilement comprend en partant du substrat :
- un premier ensemble diélectrique de couches comprenant :
   o une couche de haut indice de réfraction à base d'oxyde de titane, dont la valeur de l'indice de réfraction est supérieur à 2,40 à 550nm et dont l'épaisseur optique est comprise entre 10 et 50 nm, voire entre 20 et 40 nm, de préférence entre 30 et 40 nm ;
   o une couche de lissage à base d'oxyde de zinc et d'étain, dont l'épaisseur optique est comprise entre 10 et 30 nm, de préférence entre 15 et 25 nm ;
   o une couche de contact inférieur à base d'oxyde de zinc, dont l'épaisseur est comprise entre 10 et 20 nm,
- une première couche fonctionnelle métallique à base d'argent, dont l'épaisseur est comprise entre 6 et 20 nm ;
- une première couche de blocage métallique à base de titane dont l'épaisseur est comprise entre 0,5 et 1,5 nm ;
- un second ensemble diélectrique de couches comprenant :
   o une couche diélectrique à base d'oxyde de zinc dont l'épaisseur optique est comprise entre 5 et 15 nm, de préférence entre 8 et 12nm ;
   o une couche diélectrique à base de nitrure de silicium dont l'épaisseur optique est comprise entre 100 et 150nm, de préférence entre 100 et 130nm ;
   o une couche de lissage à base d'oxyde de zinc et d'étain, dont l'épaisseur optique est comprise entre 10 et 30 nm, de préférence entre 15 et 25 nm ;
   o une couche de contact inférieur à base d'oxyde de zinc, dont l'épaisseur optique est comprise entre 10 et 20 nm,
- une seconde couche fonctionnelle métallique à base d'argent, dont l'épaisseur est comprise entre 6 et 20 nm ;
- une seconde couche de blocage métallique à base de titane dont l'épaisseur est comprise entre 0,5 et 1,5 nm ;
- un troisième ensemble diélectrique de couches comprenant :
   o une couche diélectrique à base d'oxyde de zinc dont l'épaisseur optique est comprise entre 5 et 15 nm, de préférence entre 8 et 12nm ;
   o une couche diélectrique à base de nitrure de silicium dont l'épaisseur optique est comprise entre 100 et 150nm, de préférence entre 100 et 130nm ;
   o une couche de lissage à base d'oxyde de zinc et d'étain, dont l'épaisseur optique est comprise entre 10 et 30 nm, de préférence entre 15 et 25 nm ;
   o une couche de contact inférieur à base d'oxyde de zinc, dont l'épaisseur optique est comprise entre 10 et 20 nm,
- une troisième couche fonctionnelle métallique à base d'argent, dont l'épaisseur est comprise entre 6 et 20 nm ;
- une troisième couche de blocage métallique à base de titane dont l'épaisseur est comprise entre 0,5 et 1,5 nm ;
- un quatrième ensemble diélectrique de couches comprenant :
   o une couche diélectrique à base d'oxyde de zinc dont l'épaisseur optique est comprise entre 5 et 15 nm, de préférence entre 8 et 12nm ;
   o une couche de haut indice de réfraction à base de nitrure de silicium et de zirconium, dont la valeur de l'indice de réfraction est supérieur à 2,15 à 550nm et dont l'épaisseur optique est comprise entre 10 et 50 nm, voire entre 30 et 40 nm, de préférence entre 20 et 30 nm ;
   o une couche diélectrique à base de nitrure de silicium dont l'épaisseur optique est comprise entre 100 et 150nm, de préférence entre 100 et 130nm ;
   o une couche protectrice de lissage à base d'oxyde de zinc et d'étain, dont l'épaisseur optique est comprise entre 5 et 20 nm, de préférence entre 9 et 12 nm.

Dans un second mode préféré de réalisation de l'invention, l'empilement est constitué en partant du substrat par :
- un premier ensemble diélectrique de couches comprenant :
   o une couche de haut indice de réfraction à base d'oxyde de titane, dont la valeur de l'indice de réfraction est supérieur à 2,40 à 550nm et dont l'épaisseur optique est comprise entre 10 et 50 nm, voire entre 20 et 40 nm, de préférence entre 30 et 40 nm ;
   o une couche de lissage à base d'oxyde de zinc et d'étain, dont l'épaisseur optique est comprise entre 10 et 30 nm, de préférence entre 15 et 25 nm ;
   o une couche de contact inférieur à base d'oxyde de zinc, dont l'épaisseur est comprise entre 10 et 20 nm,
- une première couche fonctionnelle métallique à base d'argent, dont l'épaisseur est comprise entre 6 et 20 nm ;
- une première couche de blocage métallique à base de titane dont l'épaisseur est comprise entre 0,5 et 1,5 nm ;
- un second ensemble diélectrique de couches comprenant :
   o une couche diélectrique à base d'oxyde de zinc dont l'épaisseur optique est comprise entre 5 et 15 nm, de préférence entre 8 et 12nm ;
   o une couche diélectrique à base de nitrure de silicium dont l'épaisseur optique est comprise entre 100 et 150nm, de préférence entre 100 et 130nm ;
   o une couche de lissage à base d'oxyde de zinc et d'étain, dont l'épaisseur optique est comprise entre 10 et 30 nm, de préférence entre 15 et 25 nm ;
   o une couche de contact inférieur à base d'oxyde de zinc, dont l'épaisseur optique est comprise entre 10 et 20 nm,
- une seconde couche fonctionnelle métallique à base d'argent, dont l'épaisseur est comprise entre 6 et 20 nm ;
- une seconde couche de blocage métallique à base de titane dont l'épaisseur est comprise entre 0,5 et 1,5 nm ;
- un troisième ensemble diélectrique de couches comprenant :
   o une couche diélectrique à base d'oxyde de zinc dont l'épaisseur optique est comprise entre 5 et 15 nm, de préférence entre 8 et 12nm ;
   o une couche diélectrique à base de nitrure de silicium dont l'épaisseur optique est comprise entre 100 et 150nm, de préférence entre 100 et 130nm ;
   o une couche de lissage à base d'oxyde de zinc et d'étain, dont l'épaisseur optique est comprise entre 10 et 30 nm, de préférence entre 15 et 25 nm ;
   o une couche de contact inférieur à base d'oxyde de zinc, dont l'épaisseur optique est comprise entre 10 et 20 nm,
- une troisième couche fonctionnelle métallique à base d'argent, dont l'épaisseur est comprise entre 6 et 20 nm ;
- une troisième couche de blocage métallique à base de titane dont l'épaisseur est comprise entre 0,5 et 1,5 nm ;
- un quatrième ensemble diélectrique de couches comprenant :
   o une couche diélectrique à base d'oxyde de zinc dont l'épaisseur optique est comprise entre 5 et 15 nm, de préférence entre 8 et 12nm ;
   o une couche de haut indice de réfraction à base de nitrure de silicium et de zirconium, dont la valeur de l'indice de réfraction est supérieur à 2,15 à 550nm et dont l'épaisseur optique est comprise entre 10 et 50 nm, voire entre 30 et 40 nm, de préférence entre 20 et 30 nm ;
   o une couche diélectrique à base de nitrure de silicium dont l'épaisseur optique est comprise entre 100 et 150nm, de préférence entre 100 et 130nm ;
   o une couche protectrice de lissage à base d'oxyde de zinc et d'étain, dont l'épaisseur optique est comprise entre 5 et 20 nm, de préférence entre 9 et 12 nm.

Le substrat transparent selon l'invention peut être un substrat minéral ou organique, rigide ou souple, plan ou bombé. Il sera de préférence incolore afin de minimiser l'absorption de la lumière et ainsi conserver une transmission lumineuse maximale.

Des exemples de substrats organiques pouvant être avantageusement utilisés pour la mise en œuvre de l'invention sont les matériaux polymères tels que les polyéthylènes, les polyesters, les polyacrylates, les polycarbonates, les polyuréthanes, les polyamides. Ces polymères peuvent être fluorés.

Des exemples de substrats minéraux pouvant être avantageusement mis en œuvre dans l'invention sont les feuilles de verre minéral ou vitrocéramique. Le verre est de préférence un verre de type silico-sodo-calcique, borosilicate, aluminosilicate ou encore alumino-boro-silicate.

Selon un mode de réalisation du matériau selon l'invention, l'empilement est déposé sur le substrat transparent à l'aide des méthodes classiques de dépôt connues de l'homme du métier. De préférence, l'empilement peut être déposée par la méthode de pulvérisation cathodique assistée par un champ magnétique (procédé magnétron).

Dans un mode particulier de réalisation de l'invention, le substrat transparent est une feuille de verre minéral. Le matériau selon l'invention peut alors être un élément d'un vitrage monolithique, feuilleté ou multiple.

Un vitrage monolithique comprend qu'une seule feuille de verre. Lorsque le matériau selon l'invention est utilisé comme vitrage monolithique, l'empilement est de préférence déposé sur la face de la feuille verre orientée vers l'intérieur de la pièce du bâtiment sur les murs de laquelle le vitrage est installé. Dans une telle configuration, il peut être avantageux de protéger l'empilement contre les dégradations physiques ou chimiques à l'aide d'un moyen approprié.

Un vitrage multiple comprend au moins deux feuilles de verre parallèles séparées par une lame de gaz isolant. La plupart des vitrages multiples sont des doubles ou triples vitrages, c'est-à-dire qu'ils comprennent respectivement deux ou trois vitrages. Lorsque le matériau selon l'invention est utilisé comme élément d'un vitrage multiple, l'empilement est de préférence déposé sur la face de la feuille verre orientée vers l'intérieur en contact avec le gaz isolant. Cette disposition a pour avantage de protéger l'empilement des dégradations chimiques ou physiques de l'environnement extérieur.

Un vitrage feuilleté comprend au moins deux feuilles de verre parallèles séparées par un feuillet intercalaire. Ce feuillet intercalaire est généralement un matériau organique, comme par exemple le polyvinylbutyral (PVB). Lorsque le matériau selon l'invention est utilisé comme élément d'un vitrage feuilleté, l'empilement peut être déposé sur une quelconque des faces de la feuille verre, que ces faces soient en contact avec le feuillet intercalaire ou non. Le dépôt de l'empilement sur la face de la feuille de verre en contact avec le feuillet intercalaire peut être avantageux pour le prémunir des dégradations chimiques ou physiques de l'environnement extérieur. Il faut cependant veiller à ce que les constituants du feuillet intercalaire ne soient pas de nature à interagir avec les couches de l'empilement et provoquer sa dégradation.

Un vitrage comprenant un matériau selon l'invention présente une couleur neutre en réflexion extérieure dans la gamme chromatique bleu ou bleu-vert. L'aspect visuel varie peu quel soit l'angle d'observation. Il n'y a pas perception d'une quelconque inhomogénéité de teinte pour un observateur. Dans le système L*a*b*, la couleur du vitrage se caractérise de préférence, en transmission, en réflexion interne et/ou en réflexion externe, par une valeur pour le paramètre a* comprise entre -4 et 1 et une valeur du paramètre b* comprise entre -7,5 et 0,5. En particulier, la valeur absolue de la variation des paramètres a* et b* dans l'espace chromatique L*a*b* lorsque l'angle d'observation varie entre 0 et 60° est inférieure ou égale à 5.

Les caractéristiques et les avantages du matériau selon l'invention sont illustrés par les exemples décrits ci-après qui se réfèrent aux figures suivantes.
A des fins d'illustration de l'effet technique propre à la présente invention, six exemples de matériaux selon l'invention et un exemple comparatif de matériaux, qui ne possèdent pas les caractéristiques des matériaux selon l'invention, ont été fabriqués. Les empilements de couches sont décrits dans le tableau 1. Ils ont été déposés sur une feuille de verre silico-sodo-calcique d'une épaisseur de 6 mm. Les conditions de dépôt de couches sont celles habituellement utilisées par l'homme du métier pour une pulvérisation cathodique assistée par un champ magnétique (procédé magnétron), et largement documentés dans la littérature, par exemple les demandes de brevet WO2012/093238 et WO2017/006029.

Chacun de ces empilements de couches comprend :
- trois couches fonctionnelles métalliques à base d'argent, notées CFM1, CFM2 et CFM3 respectivement en partant du substrat ;
- quatre ensembles diélectrique de couches, notés ED1, ED2, ED3 et ED4 respectivement ;
- trois couches de blocage, notés B1, B2 et B3 respectivement.

Les valeurs du tableau correspondent aux épaisseurs optiques totales pour les ensembles diélectriques, c'est-à-dire aux sommes des épaisseurs optiques des couches qui les constituent respectivement, et aux épaisseurs physiques, réelles ou géométriques pour les couches fonctionnelles métalliques à base d'argent et les couches de blocage. Dans le tableau, la ligne « CHI » indique l'épaisseur optique de la couche de haut indice de réfraction que chaque ensemble diélectrique de couches comprend. La ligne « CBI » indique l'épaisseur optique de la couche de bas indice de réfraction ou la somme des épaisseurs optiques des couches de bas indice de réfraction que chaque ensemble diélectrique de couches comprend. La valeur de l'indice de réfraction de la ou des couches de bas indice est inférieure à 2,15. Les valeurs en caractères gras et soulignés indiquent que la valeur l'indice de réfraction de la couche de haut indice de réfraction est égale ou supérieure à 2,40. Au bas du tableau sont reportées les valeurs des rapports de l'épaisseur optique de la couche de haut indice sur l'épaisseur optique de l'ensemble diélectrique de couche qui la comprend. Ces valeurs sont fournies uniquement pour les ensembles diélectriques de couches ED1 et ED4.

La nature des couches de blocage, de haut indice de réfraction et de celles composant les ensembles diélectriques de couches n'est pas indiquée dans le tableau 1. Les couches de contact inférieur peuvent être à base d'oxydes choisis parmi les oxydes de zinc, les oxydes de nickel, les oxydes de magnésium, les oxydes mixtes de zinc et d'étain, les oxydes mixtes de zinc et de magnésium, les oxydes mixtes de zinc et de titane. Les couches à blocage peuvent être à base de métaux et d'alliages tel que Ti ou NiCr. Les couches de haut indice de réfraction peuvent être à base de composés choisis parmi TiO₂, MnO, WO₃, NiO, ZnTiO₄, Nb₂O₅, BaTiO₃, Bi₂O₃ SiZrN. Enfin, les couches, autres que les couches de haut indice de réfraction, comprises dans les ensembles diélectriques de couches sont généralement les oxydes, oxy-nitrures ou nitrures métalliques comme, à titre d'exemple, SiO₂, TiO₂, SnO₂, ZnO, ZnAlOₓ, Si₃N₄, AlN, Al₂O₃, ZrO₂, Nb₂O₅ et leurs mélanges. Ces composés peuvent présenter des écarts à la stoechimétrie et comprendre des éléments dopant comme l'aluminium notamment.

| **Tableau 1** | | **Exemple 1** | **Exemple 2** | **Exemple 3** | **Exemple 4** | **Exemple 5** | **Exemple 6** | **Exemple Comparatif 1** |
|---|---|---|---|---|---|---|---|---|
| **ED4** | **CBI** | 33,3 | 33,3 | 33,3 | 33,3 | 33,7 | 33,3 | 33,3 |
| | **CHI** | 35,8 | 33,8 | 29,1 | **29,2** | 35,8 | **29,2** | 29,1 |
| **B3** | | 2,0 | 2,0 | 2,0 | 2,0 | 2,0 | 2,0 | 2,0 |
| **CFM3** | | 16,3 | 17,3 | 17,7 | 17,7 | 18,5 | 17,7 | 17,6 |
| **ED3** | **CBI** | - | 118,6 | 173,3 | 173,3 | 174,9 | 173,3 | 171,4 |
| | **CHI** | 165,3 | 53,5 | - | - | - | - | - |
| **B2** | | 0,5 | 0,5 | 0,5 | 0,5 | 0,5 | 0,5 | 0,5 |
| **CFM2** | | 14,0 | 14,3 | 14,2 | 14,2 | 13,8 | 14,2 | 14,1 |
| **ED2** | **CBI** | - | 114,8 | 167,2 | 167,2 | 167,2 | 167,2 | 168,3 |
| | **CHI** | 162,8 | 52,0 | - | - | - | - | - |
| **B1** | | 0,5 | 0,5 | 0,5 | 0,5 | 0,5 | 0,5 | 0,5 |
| **CFM1** | | 8,7 | 9,3 | 9,2 | 9,2 | 8,1 | 9,2 | 9,5 |
| **ED1** | **CBI** | 62,4 | 62,4 | 62,4 | 62,4 | 62,4 | 62,4 | 21,8 |
| | **CHI** | **24,5** | **27,9** | **24,7** | **24,7** | **32,3** | 24,6 | 74,1 |
| **substrat** | feuille de verre silico-sodo-calcique | | | | | | | |
| ***R4 (Eohi4*/*EoED4)*** | | 0,52 | 0,50 | 0,47 | 0,47 | 0,52 | 0,47 | 0,47 |
| ***R1 (Eohi4*/*EoED1)*** | | 0,28 | 0,31 | 0,28 | 0,28 | 0,34 | 0,28 | 0,77 |

Dans le tableau 2 sont reportées les valeurs de plusieurs paramètres permettant d'évaluer les performances optiques et thermiques des exemples de matériaux du tableau 1. Ces valeurs ont été mesurées sur un double vitrage comprenant les matériaux des exemples et ayant la structure 6/16/4 suivante : verre silico-sodo-calcique d'une épaisseur 6 mm / lame de gaz d'une épaisseur de 16mm contenant au moins 90% d'argon / verre silico-sodo-calcique d'une épaisseur de 4 mm. L'empilement de couches est déposé sur le verre d'une épaisseur de 6 mm, sur la face intérieure en contact avec la lame de gaz contenant l'argon.

La transmission lumineuse dans le spectre visible, *T_{L}*, le facteur solaire, *g*, et la sélectivité, *s*, et la réflexion interne, *Rint,* et la réflexion externes, *Rext,* dans le spectre visible sont définis, mesurés et calculés en conformité avec les normes EN 410 et EN 14501. La couleur est mesurée dans l'espace chromatique L*a*b* CIE 1976 selon la norme ISO 11664 avec un illuminant D65 et un champ visuel de 2° pour l'observateur de référence.

| **Tableau 2** | **Exemple 1** | **Exemple 2** | **Exemple 3** | **Exemple 4** | **Exemple 5** | **Exemple 6** | **Exemple Comparatif 1** |
|---|---|---|---|---|---|---|---|
| **TL** | 67,7 | 68 | 68,1 | 68,3 | 68,8 | 68,7 | 67,9 |
| **a*T** | -3,7 | -3 | -3,7 | -2,9 | -2,8 | -3,3 | -3 |
| **b*T** | 3,8 | 0,7 | -0,5 | -0,5 | 0 | 0,1 | 0,1 |
| **Rext** | 10,2 | 11,3 | 10,7 | 12,6 | 12,2 | 12,2 | 12 |
| **a*Rext** | -0,8 | -1,1 | -1 | -2,5 | -1,9 | -1 | -1,9 |
| **b*Rext** | -4,5 | -6,7 | -4,7 | -7,4 | -7,3 | -7,2 | -4,8 |
| **Rint** | 12,7 | 14,3 | 11,2 | 15,5 | 14,7 | 14,9 | 15,2 |
| **a*Rint** | -2,2 | -3,3 | 1 | -2,8 | -2,4 | -2 | -1,6 |
| **b*Rint** | -2,3 | 0 | -2,6 | -2 | -1 | -1 | -1,5 |
| **a*60** | -1 | -2,2 | -0,8 | -1,5 | -1,8 | -1,9 | -1,3 |
| **b*60** | -3,9 | -3,8 | -3,6 | -5 | -3,2 | -4,4 | -2,7 |
| **g** | 35,2 | 35 | 35,1 | 35,06 | 35 | 35 | 35,1 |
| s | 1,92 | 1,94 | 1,94 | 1,95 | 1,97 | 1,96 | 1,93 |

Dans le tableau 2 :
- a*T et b*T sont les valeurs des paramètres a* et b* mesurées en transmission dans l'espace chromatique L*a*b* CIE 1976 avec un illuminant D65, un champ visuel de 2° pour l'observateur et un angle d'observation nul par rapport à la normale à la surface du vitrage ;
- Rext est la valeur de la réflexion lumineuse dans le spectre visible, exprimée en pourcentage, mesurée avec un illuminant D65, un champ visuel de 2° pour l'observateur sur la face externe du verre silico-sodo-calcique d'épaisseur 6 mm dudit double vitrage ;
- a*Rext et b*Rext sont les valeurs des paramètres a* et b* mesurées en réflexion dans l'espace chromatique L*a*b* CIE 1976 avec un illuminant D65 et un champ visuel de 2° pour l'observateur sur la face externe dudit verre silico-sodo-calcique d'épaisseur 6 mm dudit double vitrage selon un angle d'observation nul par rapport à la normale à la surface du vitrage ;
- Rint est la valeur de la réflexion lumineuse dans le spectre visible, exprimée en pourcentage, mesurée avec un illuminant D65, un champ visuel de 2° pour l'observateur sur la face externe du verre silico-sodo-calcique d'épaisseur 4 mm dudit double vitrage ;
- a*Rint et b*Rint sont les valeurs des paramètres a* et b* mesurées en réflexion dans l'espace chromatique L*a*b* CIE 1976 avec un illuminant D65 et un champ visuel de 2° pour l'observateur sur la face externe dudit verre silico-sodo-calcique d'épaisseur 4 mm dudit double vitrage selon un angle d'observation nul par rapport à la normale à la surface du vitrage ;
- a*60 et b*60 sont les valeurs des paramètres a* et b* mesurées en réflexion dans l'espace chromatique L*a*b* CIE 1976 avec un illuminant D65 et un champ visuel de 2° pour l'observateur sur un simple vitrage selon un angle d'observation de 60° par rapport à la normale à la surface dudit vitrage.

Les exemples 1 à 6 du tableau 1 sont des exemples de matériaux selon l'invention.

Dans l'exemple 1, chaque ensemble diélectrique de couches comprend une couche de haut indice de réfraction dont la valeur de l'indice de réfraction est supérieure à 2,15. Les ensembles diélectriques de couches ED2 et ED3 sont constituées uniquement de couches de haut indice de réfraction. La valeur de l'indice de réfraction de la couche de haut indice de réfraction comprise dans l'ensemble diélectrique de couches ED1 est supérieure à 2,40. La transmission lumineuse obtenue est inférieure à 68%. Et la valeur du paramètre b*T est supérieure à 3, ce qui correspond à une coloration jaune en transmission.

L'exemple 2 est similaire à l'exemple 1 sauf que les ensembles diélectrique de couches ED2 et ED4 comprennent également d'autres couches qui n'ont pas de haut indice de réfraction. Les épaisseurs optiques de chacune des couches de ces deux ensembles ont été adaptés de manière à que les sommes des épaisseurs optiques de ces deux ensembles restent comparables à celles de l'exemple 1. Dans cet exemple l'empilement plus complexe mais les valeurs des paramètres évaluant les performances optiques et thermiques restent comparables. Le fait que les ensembles diélectriques de couches ED2 et ED3 comprennent une couche de haut indice n'apportent pas de bénéfice supplémentaire.

Les exemples 3 à 6 sont des améliorations des exemples 1 et 2. Dans ces exemples, les ensembles diélectriques de couches ED2 et ED3 ne comprennent pas de couches de haut indice de réfraction dont la valeur de l'indice de réfraction est supérieure à 2,15. Dans les exemples 3 et 5, seul l'ensemble diélectrique de couches ED1 comprend une couche de haut indice de réfraction dont la valeur de l'indice de réfraction est supérieure à 2,40. Dans l'exemple 6, elle est comprise uniquement dans l'ensemble diélectrique de couches ED4. Dans l'exemple 4, les ensembles diélectriques de couches ED1 et ED4 comprennent chacun une couche de haut indice de réfraction dont la valeur de l'indice de réfraction est supérieure à 2,40.

Il apparait clairement, à partir des valeurs du tableau 2, les exemples 3 à 6 de matériaux selon l'invention permettent d'améliorer les performances optiques et thermiques par rapport aux exemples 1 et 2. La transmission lumineuse dans le spectre visible, *T_{L}*, est supérieure à 68% le facteur solaire, *g,* est inférieur à 36% et la sélectivité, s, est de 1,9 ou plus. Les valeurs du paramètre a* sont inférieures à 1, et inférieures à 0 pour les exemples 1, 2, 4, 5 et 6. Les valeurs du paramètres b* sont inférieures à 1. La valeur absolue des variations de chacun de ces deux paramètres lorsque l'angle d'observation varie entre 0 et 60° est inférieur à 5.

L'exemple comparatif 1 est un exemple de matériaux qui n'est pas selon l'invention. Les ensembles diélectriques de couches ED1 et ED4 comprennent uniquement des couches de haut indice de réfraction dont les valeurs sont égales ou supérieures à 2,15 et inférieures à 2,40. Le rapport R1 est supérieur à 0,55. La transmission lumineuse obtenue est inférieure à 68%.

Deux autres exemples de matériaux correspondant à des modes préférés de réalisation de l'invention sont indiqués dans le tableau 3. Les empilements ont été déposés sur une feuille de verre silico-sodo-calcique d'une épaisseur de 6 mm. Les conditions de dépôt de couches sont celles habituellement utilisées par l'homme du métier pour une pulvérisation cathodique assistée par un champ magnétique (procédé magnétron), et largement documentés dans la littérature, par exemple, les demandes de brevet WO2012/093238 et WO2017006029.

Chacun de ces empilements de couches comprend :
- trois couches fonctionnelles métalliques à base d'argent, notées Ag1, Ag2 et Ag3 respectivement en partant du substrat ;
- quatre ensembles diélectrique de couches, notés D1, D2, D3 et D4 respectivement ;
- trois couches de blocage à base de titane métallique, notées B1, B2 et B3 respectivement.

Les ensembles diélectriques de couches D1, D2 et D3 comprennent une couche contact inférieur à base de d'oxyde de zinc disposée en-dessous et contact des couches d'argent Ag1, Ag2 et Ag3 respectivement. Ils comprennent également une couche de lissage disposée en-dessous et en contact des couches de contact inférieur à base d'oxyde de zinc.

L'ensemble diélectrique de couches D1 comprend une couche de haut indice de réfraction à base d'oxyde de titane et dont la valeur de l'indice de réfraction est supérieure à 2,40. L'ensemble diélectrique de couches D4 comprend une couche de haut indice de réfraction à base de nitrure de zirconium et de silicium et dont la valeur de l'indice de réfraction est supérieure à 2,15 et inférieure à 2,40.

Les valeurs du tableau 3 correspondent aux épaisseurs optiques pour les couches comprises dans les ensembles diélectriques, et aux épaisseurs physiques, réelles ou géométriques pour les couches fonctionnelles métalliques à base d'argent et les couches de blocage. Pour l'ensemble des exemples, la nature des couches fonctionnelles métalliques, des couches de blocages et des couches comprises dans les ensembles diélectriques de couches est indiquée. Pour chacun des deux exemples, les valeurs des rapports R1 et R4 sont compris entre 0,25 et 0,55.

Les valeurs des paramètres permettant d'évaluer les performances optiques et thermiques des exemples de matériaux du tableau 3 sont reportées dans le tableau 4. Ces valeurs ont été mesurées sur un double vitrage comprenant les matériaux des exemples et ayant la structure 6/16/4 suivante : verre silico-sodo-calcique d'une épaisseur 6 mm / lame de gaz d'une épaisseur de 16mm contenant au moins 90% d'argon / verre silico-sodo-calcique d'une épaisseur de 4 mm. L'empilement de couches est déposé sur le verre d'une épaisseur de 6 mm, sur la face intérieure en contact avec la lame de gaz contenant l'argon. Les définitions des paramètres et les méthodes utilisées pour leur mesure sont identiques à celles décrites pour le tableau 2.

Les deux exemples du tableau 3 permettent d'atteindre les performances optiques et thermiques recherchées. La transmission lumineuse, *T_{L}*, est supérieure à 68% le facteur solaire, *g,* est inférieur à 36% et la sélectivité, s, est de 1,9 ou plus. Les valeurs du paramètre a* sont inférieures à 4 et les valeurs du paramètres b* sont inférieures à 1. Les valeurs absolues des variations de chacun de ces deux paramètres lorsque l'angle d'observation varie entre 0 et 60° sont inférieures à 5.

**Tableau 3**

| | | **Exemple 7** | **Exemple 8** |
|---|---|---|---|
| **D4** | **SnZnO** | 11,9 | 9,7 |
| | **SiN** | 24,1 | 23,7 |
| | **SiZrN** | 23,3 | 20,4 |
| | **ZnO** | 9,5 | 11,1 |
| **B3** | **Ti** | 1,3 | 0,9 |
| **Ag3** | **Ag** | 17,0 | 16,5 |
| **D3** | **ZnO** | 17,2 | 17,4 |
| | **SnZnO** | 20,8 | 20,2 |
| | **SiN** | 116,7 | 103,2 |
| | **ZnO** | 12,7 | 11,9 |
| **B2** | **Ti** | 0,7 | 0,7 |
| **Ag2** | **Ag** | 12,9 | 12,6 |
| **D2** | **ZnO** | 13,9 | 13,9 |
| | **SnZnO** | 16,1 | 18,3 |
| | **SiN** | 131,5 | 129,2 |
| | **ZnO** | 9,9 | 8,9 |
| **B1** | **Ti** | 0,9 | 0,9 |
| **Ag1** | **Ag** | 8,6 | 7,8 |
| **D1** | **ZnO** | 17,0 | 16,8 |
| | **SnZnO** | 18,1 | 19,0 |
| | **TiOx** | 38,5 | 37,7 |
| **substrat** | feuille de verre silico-sodo-calcique 6 mm | | |
| ***R4 (Eohi4*/*EoED4)*** | | 0,41 | 0,37 |
| ***R1 (Eohi4*/*EoED1)*** | | 0,52 | 0,51 |

**Tableau 4**

| | **Exemple 7** | **Exemple 8** |
|---|---|---|
| **TL** | 69,3 | 69,3 |
| **a*T** | -4,4 | -4,1 |
| **b*T** | 3,1 | 2,1 |
| **Rext** | 11,2 | 11,7 |
| **a*Rext** | -2,2 | -2,7 |
| **b*Rext** | -6,7 | -6,2 |
| **Rint** | 12,8 | 13,9 |
| **a*Rint** | -2,7 | -3 |
| **b*Rint** | -2,1 | -1,5 |
| **a*60** | -4,7 | -2,6 |
| **b*60** | -1,6 | -2,9 |
| **g** | 34,5 | 34,8 |
| s | 2,01 | 1,99 |

## Revendications

1. Matériau comprenant un substrat transparent sur au moins une surface duquel est déposé un empilement de couches comprenant n couches fonctionnelles métalliques à base d'argent et *n+1* ensembles diélectriques de couches, n étant égal ou supérieur à 3 et chaque couche fonctionnelle métallique à base d'argent étant disposée entre deux ensembles diélectriques de couches, ledit matériau étant **caractérisé en ce que** l'ensemble diélectrique de couches situé en-dessous de la première couche fonctionnelle métallique à base d'argent en partant du substrat et l'ensemble diélectrique de couches situé au-dessus de la dernière couche fonctionnelle métallique à base d'argent en partant du substrat,
- comprennent chacun une couche de haut indice de réfraction, la valeur dudit indice étant égale ou supérieure à 2,15 à la longueur d'onde de 550nm ;
- la valeur de l'indice de réfraction d'au moins une desdites couches de haut indice est égale ou supérieure à 2,40 à la longueur d'onde 550nm ;
- la valeur du rapport de l'épaisseur optique de chacune desdites couches de haut indice de réfraction sur l'épaisseur optique de l'ensemble diélectrique de couches dans lequel elle est comprise est comprise entre 0,25 et 0,55 ;
- l'épaisseur optique de l'ensemble diélectrique de couches situé au-dessus de la dernière couche fonctionnelle métallique à base d'argent en partant du substrat est inférieure ou égale à l'épaisseur optique de l'ensemble diélectrique de couches situé en-dessous de la première couche fonctionnelle métallique à base d'argent en partant du substrat ;
- l'épaisseur optique de l'ensemble diélectrique de couches situé au-dessus de la dernière couche fonctionnelle métallique à base d'argent en partant du substrat est comprise entre 20 et 50 nm, de préférence entre 30 et 40 nm, et l'épaisseur optique de l'ensemble diélectrique de couches situé en-dessous de la première couche fonctionnelle métallique à base d'argent en partant du substrat est comprise entre 50 et 100 nm, de préférence entre 55 et 75nm.

2. Matériau selon la revendication 1, tel que les épaisseurs optiques de chacune desdites couches de haut indice de réfraction sont comprises entre 10 et 70 nm, de préférence entre 20 et 50 nm.

3. Matériau selon l'une quelconque des revendications 1 à 2, tel que l'épaisseur optique de l'ensemble diélectrique de couches situé en-dessous de la première couche fonctionnelle à base d'argent est inférieure aux épaisseurs optiques de chacun des ensembles diélectriques de couches situés entre la première et la dernière couches fonctionnelles métalliques à base d'argent.

4. Matériau selon l'une quelconque des revendications 1 à 3, tel que l'épaisseur optique de chacun des ensembles diélectriques de couches situés entre la première et la dernière couche fonctionnelle métallique à base d'argent est comprise entre 100 et 200 nm, de préférence entre 150 et 180 nm.

5. Matériau selon l'une quelconque des revendications 1 à 4, tel que la valeur du coefficient d'absorption des couches de haut indice de réfraction est inférieure ou égale à 0,02 à 550nm.

6. Matériau selon l'une quelconque des revendications 1 à 5, tel que chaque ensemble diélectrique de couches situé entre la première et la dernière couches fonctionnelles métalliques à base d'argent en partant du substrat ne comprend pas de couche de haut indice de réfraction dont la valeur de l'indice de réfraction est égale ou supérieure à 2,15 à 550nm.

7. Matériau selon l'une quelconque des revendication 1 à 6, tel que les couches de haut indice de réfraction sont à base de composés choisis parmi TiO₂, MnO, WO₃, NiO, ZnTiO₄, Nb₂O₅, BaTiO₃, Bi₂O₃ SiZrN.

8. Matériau selon l'une quelconque des revendication 1 à 7, tel que la couche de haut indice de réfraction comprise dans l'ensemble diélectrique de couches situé en-dessous de la première couche fonctionnelle métallique à base d'argent est à base d'oxyde de titane, et la couche de haut indice de réfraction comprise dans l'ensemble diélectrique de couches situé au-dessus de la dernière couche fonctionnelle à partir du substrat est à base de nitrure de silicium et zirconium.

9. Matériau selon l'une quelconque des revendications 1 à 8, tel que l'épaisseur de chaque couche fonctionnelle métallique à base d'argent est supérieure à l'épaisseur de la couche fonctionnelle à base d'argent qui la précède en partant du substrat.

10. Matériau selon l'une quelconque des revendications 1 à 9, tel que l'épaisseur de chacune des couches fonctionnelles métalliques à base d'argent est comprise entre 6 et 20 nm.

11. Matériau selon l'une quelconque des revendications 1 à 10, tel que l'empilement de couches comprend en outre au moins une couche de blocage disposée au-dessus et en contact d'une couche fonctionnelle métallique à base d'argent, la ou lesdites couches à blocage étant de préférence une couche métallique à base des métaux ou alliages choisis parmi Ti et NiCr.

12. Matériau selon l'une quelconque des revendications 1 à 11, tel que l'empilement de couches comprend en outre au moins une couche de contact inférieur disposée en-dessous et en contact d'une couche fonctionnelle métallique à base d'argent, la ou lesdites couches de contact inférieur étant à base d'oxydes choisis parmi les oxydes de zinc, les oxydes de nickel, les oxydes de magnésium, les oxydes mixtes de zinc et d'étain, les oxydes mixtes de zinc et de magnésium, les oxydes mixtes de zinc et de titane.

13. Matériau selon la revendication 12, tel qu'au moins une couche de lissage est disposée en-dessous et en contact d'une couche de contact inférieur à base d'oxyde de zinc, la ou lesdites couches de lissage étant à base d'oxyde de zinc et d'étain.

14. Matériau selon l'une quelconque des revendications 1 à 13, tel que le substrat transparent est une feuille de verre.

15. Vitrage comprenant au moins un matériau selon l'une quelconque des revendications 1 à 14.

## Patentansprüche

1. Material, umfassend ein transparentes Substrat, auf dessen mindestens einer Oberfläche eine Stapelung von Schichten aufgebracht ist, die n metallische Funktionsschichten auf Silberbasis und n+1 dielektrische Schichtanordnungen umfasst, wobei n gleich oder größer als 3 ist und jede metallische Funktionsschicht auf Silberbasis zwischen zwei dielektrischen Schichtanordnungen angeordnet ist, wobei das Material **dadurch gekennzeichnet ist, dass** die dielektrische Schichtanordnung, die sich von dem Substrat ausgehend unter der ersten metallischen Funktionsschicht auf Silberbasis befindet, und die dielektrische Schichtanordnung, die sich von dem Substrat ausgehend über der letzten metallischen Funktionsschicht auf Silberbasis befindet,
- jeweils eine Schicht mit hohem Brechungsindex umfassen, wobei der Wert des Index bei der Wellenlänge von 550 nm gleich oder größer als 2,15 ist;
- der Wert des Brechungsindex von mindestens einer der Schichten mit hohem Index bei der Wellenlänge von 550 nm gleich oder größer als 2,40 ist;
- der Wert des Verhältnisses der optischen Dicke jeder der Schichten mit hohem Brechungsindex zur optischen Dicke der dielektrischen Schichtanordnung, in der sie enthalten ist, zwischen 0,25 und 0,55 liegt;
- die optische Dicke der dielektrischen Schichtanordnung, die sich von dem Substrat ausgehend über der letzten metallischen Funktionsschicht auf Silberbasis befindet, kleiner oder gleich der optischen Dicke der dielektrischen Schichtanordnung ist, die sich von dem Substrat ausgehend unter der ersten metallischen Funktionsschicht auf Silberbasis befindet;
- die optische Dicke der dielektrischen Schichtanordnung, die sich von dem Substrat ausgehend über der letzten metallischen Funktionsschicht auf Silberbasis befindet, zwischen 20 und 50 nm, vorzugsweise zwischen 30 und 40 nm, liegt und die optische Dicke der dielektrischen Schichtanordnung, die sich von dem Substrat ausgehend unter der ersten metallischen Funktionsschicht auf Silberbasis befindet, zwischen 50 und 100 nm, vorzugsweise zwischen 55 und 75 nm, liegt.

2. Material nach Anspruch 1, wobei die optischen Dicken jeder der Schichten mit hohem Brechungsindex zwischen 10 und 70 nm, vorzugsweise zwischen 20 und 50 nm, liegen.

3. Material nach einem der Ansprüche 1 bis 2, wobei die optische Dicke der dielektrischen Schichtanordnung, die sich unter der ersten Funktionsschicht auf Silberbasis befindet, kleiner als die optischen Dicken jeder der dielektrischen Schichtanordnungen ist, die sich zwischen der ersten und der letzten funktionellen Metallschicht auf Silberbasis befinden.

4. Material nach einem der Ansprüche 1 bis 3, wobei die optische Dicke jeder der dielektrischen Schichtanordnungen, die sich zwischen der ersten und der letzten metallischen Funktionsschicht auf Silberbasis befinden, zwischen 100 und 200 nm, vorzugsweise zwischen 150 und 180 nm, liegt.

5. Material nach einem der Ansprüche 1 bis 4, wobei der Wert des Absorptionskoeffizienten der Schichten mit hohem Brechungsindex bei 550 nm kleiner als oder gleich 0,02 ist.

6. Material nach einem der Ansprüche 1 bis 5, wobei jede dielektrische Schichtanordnung, die sich von dem Substrat ausgehend zwischen der ersten und der letzten metallischen Funktionsschicht auf Silberbasis befindet, keine Schicht mit hohem Brechungsindex umfasst, deren Brechungsindex-Wert bei 550 nm gleich oder größer als 2,15 ist.

7. Material nach einem der Ansprüche 1 bis 6, wobei die Schichten mit hohem Brechungsindex auf Verbindungen basieren, die aus TiO₂, MnO, WO₃, NiO, ZnTiO₄, Nb₂O₅, BaTiO₃, Bi₂O₃ SiZrN ausgewählt sind.

8. Material nach einem der Ansprüche 1 bis 7, wobei die Schicht mit hohem Brechungsindex, die in der dielektrischen Schichtanordnung enthalten ist, die sich unter der ersten metallischen Funktionsschicht auf Silberbasis befindet, auf Titanoxid basiert und die Schicht mit hohem Brechungsindex, die in der dielektrischen Schichtanordnung enthalten ist, die sich von dem Substrat ausgehend über der letzten Funktionsschicht befindet, auf Siliciumnitrid und Zirkonium basiert.

9. Material nach einem der Ansprüche 1 bis 8, wobei die Dicke jeder metallischen Funktionsschicht auf Silberbasis größer als die Dicke der Funktionsschicht auf Silberbasis ist, die ihr von dem Substrat ausgehend vorausgeht.

10. Material nach einem der Ansprüche 1 bis 9, wobei die Dicke jeder der metallischen Funktionsschichten auf Silberbasis zwischen 6 und 20 nm liegt.

11. Material nach einem der Ansprüche 1 bis 10, wobei die Stapelung von Schichten ferner mindestens eine Blockierschicht umfasst, die über und in Kontakt mit einer metallischen Funktionsschicht auf Silberbasis angeordnet ist, wobei es sich bei der oder den Blockierschichten vorzugsweise um eine Metallschicht auf Basis von Metallen oder Legierungen handelt, die aus Ti und NiCr ausgewählt sind.

12. Material nach einem der Ansprüche 1 bis 11, wobei die Stapelung von Schichten ferner mindestens eine untere Kontaktschicht umfasst, die unter und in Kontakt mit einer metallischen Funktionsschicht auf Silberbasis angeordnet ist, wobei die eine oder mehreren unteren Kontaktschichten auf Oxiden basieren, die aus Zinkoxiden, Nickeloxiden, Magnesiumoxiden, Mischoxiden von Zink und Zinn, Mischoxiden von Zink und Magnesium, Mischoxiden von Zink und Titan ausgewählt sind.

13. Material nach Anspruch 12, wobei mindestens eine Glättungsschicht unter und in Kontakt mit einer unteren Kontaktschicht auf Basis von Zinkoxid angeordnet ist, wobei die eine oder mehreren Glättungsschichten auf Zinkoxid und Zinn basieren.

14. Material nach einem der Ansprüche 1 bis 13, wobei das transparente Substrat eine Glasscheibe ist.

15. Verglasung, die mindestens ein Material nach einem der Ansprüche 1 bis 14 umfasst.

## Claims

1. A material comprising a transparent substrate on at least one surface of which is deposited a stack of layers comprising n silver-based metal functional layers and n+1 dielectric sets of layers, n being equal to or higher than 3 and each silver-based metal functional layer being placed between two dielectric sets of layers, said material being **characterized in that** the dielectric set of layers located below the first silver-based metal functional layer starting from the substrate and the dielectric set of layers located above the last silver-based metal functional layer starting from the substrate
- each comprise a high-refractive-index layer, the value of said index being equal to or higher than 2.15 at the wavelength of 550 nm;
- the value of the refractive index of at least one of said high-index layers is equal to or higher than 2.40 at the wavelength 550 nm; and
- the value of the ratio of the optical thickness of each of said high-refractive-index layers to the optical thickness of the dielectric set of layers in which it is comprised is comprised between 0.25 and 0.55;
- that the optical thickness of the dielectric set of layers located above the last silver-based metal functional layer starting from the substrate is smaller than or equal to the optical thickness of the dielectric set of layers located below the first silver-based metal functional layer starting from the substrate;
- the optical thickness of the dielectric set of layers located above the last silver-based metal functional layer starting from the substrate is comprised between 20 and 50 nm, preferably between 30 and 40 nm, and the optical thickness of the dielectric set of layers located below the first silver-based metal functional layer starting from the substrate is comprised between 50 and 100 nm, preferably between 55 and 75 nm.

2. The material as claimed in claim 1, such that the optical thicknesses of each of said high-refractive-index layers are comprised between 10 and 70 nm, preferably between 20 and 50 nm.

3. The material as claimed in any one of claims 1 to 2, such that the optical thickness of the dielectric set of layers located below the first silver-based functional layer is smaller than the optical thicknesses of each of the dielectric sets of layers located between the first and last silver-based metal functional layers.

4. The material as claimed in any one of claims 1 to 3, such that the optical thickness of each of the dielectric sets of layers located between the first and last silver-based metal functional layer is comprised between 100 and 200 nm, preferably between 150 and 180 nm.

5. The material as claimed in any one of claims 1 to 4, such that the value of the absorption coefficient of the high-refractive-index layers is lower than or equal to 0.02 at 550 nm.

6. The material as claimed in any one of claims 1 to 5, such that each dielectric set of layers located between the first and last silver-based metal functional layers starting from the substrate does not comprise any high-refractive-index layer the value of the refractive index of which is equal to or higher than 2.15 at 550 nm.

7. The material as claimed in any one of claims 1 to 6, such that the high-refractive-index layers are based on compounds chosen from TiO₂, MnO, WO₃, NiO, ZnTiO₄, Nb₂O₅, BaTiO₃, Bi₂O₃ SiZrN.

8. The material as claimed in any one of claims 1 to 7, such that the high-refractive-index layer comprised in the dielectric set of layers located below the first silver-based metal functional layer is based on titanium oxide, and the high-refractive-index layer comprised in the dielectric set of layers located above the last functional layer from the substrate is based on zirconium and silicon nitride.

9. The material as claimed in any one of claims 1 to 8, such that the thickness of each silver-based metal functional layer is larger than the thickness of the silver-based functional layer that precedes it starting from the substrate.

10. The material as claimed in any one of claims 1 to 9, such that the thickness of each of the silver-based metal functional layers is comprised between 6 and 20 nm.

11. The material as claimed in any one of claims 1 to 10, such that the stack of layers furthermore comprises at least one blocker layer placed above and in contact with a silver-based metal functional layer, said one or more blocker layers preferably being metal layers based on metals or alloys chosen from Ti and NiCr.

12. The material as claimed in any one of claims 1 to 11, such that the stack of layers furthermore comprises at least one lower contact layer placed below and in contact with a silver-based metal functional layer, said one or more lower contact layers being based on oxides chosen from zinc oxides, nickel oxides, magnesium oxides, zinc-tin oxides, zinc-magnesium oxides, zinc-titanium oxides.

13. The material as claimed in claim 12, such that at least one smoothing layer is placed below and in contact with a lower contact layer based on zinc oxide, said one or more smoothing layers being based on tin and zinc oxide.

14. The material as claimed in any one of claims 1 to 13, such that the transparent substrate is a glass sheet.

15. A glazing comprising at least one material as claimed in any one of claims 1 to 14.
